# EUROPEAN PATENT APPLICATION

(11) **EP 4 484 148 A1**
(43) Date of publication of application: **01.01.2025**
(21) Application number: 24179614.3
(22) Date of filing: 03.06.2024
(51) Int. Cl.: B29D 99/00, B29C 70/08, B29C 70/44

(54) **A METHOD OF MANUFACTURING A COMPOSITE ARTICLE PRECURSOR**

(30) Priority: 26.06.2023 GB 202309566
(71) Applicant: Rolls-Royce plc, London N1 9FX (GB)
(72) Inventor: Riccard, Charlie, Derby, DE24 8BJ (GB)
(74) Representative: Rolls-Royce plc

(57) **Abstract**

A method of manufacturing a composite article precursor involving: laying down a first grouping (35a) of at least one layer of composite material upon an upwardly-facing first surface of a substrate; disposing a first deformable support (40) over the first grouping of at least one layer of composite material; securing the first deformable support to the substrate via a first securing fixing (41); rotating the substrate about an axis (37) such the first surface is no longer upwardly-facing and a second surface of the substrate is upwardly-facing; laying down a second grouping (35b) of at least one layer of composite material upon the second surface of the substrate; and vacuum debulking an assembly comprising the first grouping of at least one layer of composite material, the second grouping of at least one layer of composite material, the first deformable support and the substrate.

## Description

### Field

The present disclosure concerns a method of manufacturing a composite article precursor. In particular, the present disclosure concerns a method of supporting uncured plies of the composite article precursor during its manufacture, prior to a vacuum debulking process. The uncured plies that are supported may be at different orientations and/or on different surfaces to each other.

### Background

Vacuum debulking may be used during the manufacture of a composite article to remove gas bubbles that have become trapped between adjacent layers of composite material as successive layers of composite material are laid down. Vacuum debulking may also be used to force resin to flow between fibers of the composite material, increasing the strength of the composite article once the resin has cured.

As adjacent uncured plies prior to vacuum debulking may not adhere sufficiently strongly to each other, it is desirable to perform vacuum debulking after plies have been disposed on a single surface, before an orientation of the article may be changed and plies applied on a different surface. This is time-consuming, increasing manufacturing cost.

There is therefore a desire to save both time and money during the manufacture of a composite article, by reducing the degree of vacuum debulking required.

### Summary

According to a first aspect there is provided a method of manufacturing a composite article precursor. The method comprises: laying down a first grouping of at least one layer of composite material upon a substantially upwardly-facing first surface of a preform of the composite article precursor; disposing a first deformable support over the first grouping of the at least one layer of composite material; securing the first deformable support to the preform via a first securing fixing; rotating the preform about an axis such that the first surface is no longer substantially upwardly-facing and a second surface of the preform is substantially upwardly-facing; laying down a second grouping of at least one layer of composite material upon the second surface of the preform; and vacuum debulking an assembly comprising the first grouping of at least one layer of composite material, the second grouping of at least one layer of composite material, the first deformable support, and the preform.

Optionally, a second deformable support may be secured over the second grouping of at least one layer of composite material and secured to the second deformable support to the first support via a second securing fixing.

Optionally, a first release layer may be placed over the first grouping of at least one layer of composite material before the first deformable support is disposed over the first grouping of at least one layer of composite material.

Optionally, a second release layer may be placed over the second grouping of at least one layer of composite material before the second deformable support is disposed over the second grouping of at least one layer of composite material.

In some embodiments, the first support and/or second support may alternatively or additionally comprise a material which enables easy separation of the support from the underlying layers of composite material, following vacuum debulking.

Incorporation of a release layer and/or material into the support that enable easy separation from the layers of composite material may be desirable as it mitigates against the risk of delamination within the plurality of layers during removal of the support after vacuum debulking.

Optionally, the first surface of the preform and the second surface of the preform of the composite component may be opposing. This makes the method applicable to the manufacture of aerofoils or hydrofoils, which have substantially opposing surfaces.

Optionally, the first deformable support and/or the optional second deformable support may be porous. Porosity (for example, by forming a series of holes in the deformable supports, or by the material from which the support is formed having a porous structure) may be advantageous , as this porosity may assist removal of air bubbles between the support and plurality of layers during vacuum debulking.

Vacuum debulking the assembly may comprise placing the assembly within a flexible and non-porous bag, sealing the bag and at least partially evacuating the bag.

The first securing fixing and/or the second securing fixing may form a clamping arrangement.

The clamping arrangement secures a support to the precursor, such that layers of uncured composite material are supported when the surface on which they have been laid down is no longer substantially upward facing.

The clamping arrangement may be a bolting arrangement comprising a plurality of bolts or a plurality of studs aligned in a common direction. Other forms of clamping arrangement are also possible, for example, vacuum clamping and/or magnetic clamping.

In embodiments comprising a bolting arrangement, the bolting arrangement of the first securing fixing may be aligned with the bolting arrangement of the second securing fixing. This has the advantages that bolts and/or studs of the first mounting arrangement may be re-used for the second securing fixing, whilst manufacturing time taken preparing securing fixings for use (for example, forming through holes in the precursor) may be reduced.

Optionally, the first securing fixing and the optional second securing fixing may be located in a peripheral portion of the preform that surrounds a core portion of the preform. This may be advantageous because it prevents the incorporation of a localised weakness (for example, through holes), in the core portion of the composite article precursor, which will subsequently become part of a load-bearing composite article.

The second securing fixing may comprise an elastically deformable member which applies a compressive force to the first grouping of at least one layer of composite material and a compressive force to the second grouping of at least one layer of composite material.

At least one additional, independent, method may be performed on at least the composite article precursor to form a composite article. The at least one additional method may include trimming the composite article precursor, reinforcing the composite article precursor and/or coating the composite article precursor.

The composite article formed from the composite article precursor may be an aerofoil, such as a fan blade of a gas turbine engine or a blade of a wind turbine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

The term "composite article precursor" as used herein is the product (i.e., output) of a manufacturing method used, in sequence with additional manufacturing methods to form a composite article.

For example, if the composite article is a fan blade for a gas turbine engine, the additional manufacturing methods may include curing composite material of the composite article precursor, trimming the composite article precursor to remove excess material and/or the addition of mechanical reinforcement to a portion of the precursor and/or the application of a coating to the precursor to form the composite article.

The composite article precursor is formed from a plurality of layers of composite material, each layer comprising composite fiber (for example, carbon fiber, aramid fiber, glass fiber), encapsulated within a resin matrix. The composite material may be a pre impregnated composite material ("pre-preg").

The composite article formed from the composite article precursor may be an aerofoil or a hydrofoil or a composite panel.

Examples of aerofoil include a composite fan blade for a gas turbine engine or another aerodynamic component of a gas turbine engine such as a compressor stator blade, a fan outlet guide vane, a compressor outlet guide vane.

An additional example of an aerofoil is a wind turbine blade.

As the method disclosed is particularly applicable to the manufacture of composite article precursors comprising a pair of largely opposing surfaces, the method is also applicable to the manufacture of precursors for composite panels. For example, in relation to a gas turbine engine, the method is therefore applicable to the manufacture of precursors for impact liner panels which surround the propulsive fan, or other panels within a nacelle of a gas turbine engine.

The composite article precursor is formed around a preform.

A preform is a substrate upon which layers of the composite material are laid down to form the composite article precursor. The preform may have a three-dimensional form. For example, if the composite article, formed from a composite article precursor, is an aerofoil or a hydrofoil, an outer surface of the preform may be substantially similar to a three-dimensional surface that approximates the desired outer surface of the composite article precursor.

At least a portion of the preform (a core portion) remains in the finished composite article. The preform may additionally comprise a peripheral portion, that is removed by an additional manufacturing method.

The preform may be solid (i.e., monolithic, containing no voids). Alternatively, the preform may be hollow.

The preform may be manufactured by any suitable method. For example, the preform may be formed by at least one of a moulding process (such as injection moulding), a casting process, a machining process.

### Brief description of the drawings

Embodiments will now be described by way of example only, with reference to the Figures, in which:
**FIG. 1** is a sectional side view of a gas turbine engine;
**FIG. 2** is an example aerofoil;
**FIG. 3** is an example schematic cross-section "A-A" of the aerofoil of FIG. 2;
**FIG. 4** shows an example preform of a composite article mounted on a fixture;
**FIG. 5** shows a second example of a preform;
**FIG. 6** shows a cross-section through section line "B-B" of FIG. 5;
**FIG. 7** shows an example stage of manufacturing involving the preform of FIG. 5;
**FIG. 8** shows a second example stage of manufacturing involving the preform of FIG. 5;
**FIG. 9** shows a third example stage of manufacturing involving the preform of Fig. 5;
**FIG. 10** shows an example bolting arrangement;
**FIG. 11** shows a second example bolting arrangement;
**FIG. 12** shows a third example bolting arrangement; and
**FIG. 13** is an example method of manufacturing of the composite article.

### Detailed description

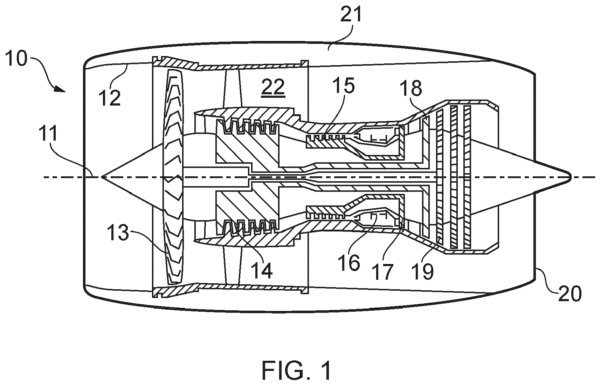

With reference to **FIG. 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The propulsive fan 13 comprises a plurality of fan blades. Traditionally, fan blades are metallic, though fan blades comprising composite material are becoming increasingly common.

A composite fan blade is an example of a composite article. Specifically, a composite fan blade is an example of an aerofoil. Other types of aerofoil include a wind turbine blade, a compressor stator blade, a fan outlet guide vane, a compressor outlet guide vane.

An aerofoil made from composite material comprises a plurality of layers of composite material, each layer comprising composite fiber (for example, carbon fiber, aramid fiber, glass fiber), encapsulated within a resin to form a composite laminate. The laminate may comprise a two-dimensional, or three-dimensional fiber structure, depending upon whether a subset of fibers transition between layers of the composite laminate.

A composite article, such as a fan blade or a wind turbine blade, may be formed from a composite article precursor.

The composite article precursor comprises a plurality of layers of composite material.

During manufacture of the composite article precursor, successive layers of composite material are laid down, each layer at least partially overlaying an adjacent layer to form a stack of layers. The layers may have a different shape to each other such that a three-dimensional contoured shape is formed by the successive addition of layers of the stack.

At least one vacuum-debulking stage is performed as part of the manufacturing method of the composite article precursor.

Vacuum debulking comprises placing an assembly or article comprising uncured composite material within a flexible and non-porous bag, sealing the bag and at least partially evacuating the bag.

A release film may be placed over the layers to be debulked, as part of the vacuum debulking process. The release film eases the removal of an assembly comprising the yet uncured, composite layers from the non-porous bag, without adherence of the outer layer to the inner surface of the bag.

The vacuum-debulking stage compresses the plurality of layers of a stack against each other such that the thickness of the plurality of layers is reduced and gas trapped between adjacent layers during the layup process is removed. This increases the bond strength between adjacent layers, improving the strength of the finished composite article once curing of the resin within the composite article has been completed. It may also remove or reduce undulations in the outer surface of the layers caused by the presence of gas bubbles within the laminate.

By removing or reducing these undulations, caused by gas bubbles between composite layers, the conformance of the achieved outer surface profile of the composite article precursor to the design intent for the composite article precursor, may be improved.

Improving the conformance of the achieved outer surface profile of the composite article to the design intent is desirable because it improves the fluid-dynamic performance of the composite article, leading to functional improvements at a system level.

For example, in cases where the composite article is a fan blade of a gas turbine engine, achieving tighter tolerance control of the outer surface of fan blade may result in a tighter tolerancing of fan efficiency in a fan comprising a plurality of fan blades and/or may result in reduced variation in a relationship of fan speed to fan thrust.

This in turn may lead to additional advantages at an engine level (i.e., at a system level), by permitting a reduced allowance to be made for engine to engine variability when setting gas turbine engine thrust ratings, with associated advantages in reduced engine rotational speed and peak engine temperatures at a demanded thrust set point.

From the above discussion, it will be understood that vacuum debulking is desirable. However, it may also be understood that as an aerofoil may have a complex three-dimensional shape, multiple stages of vacuum debulking may be required during lay-up of the composite layers, with a corresponding increase in manufacturing cost and timescales.

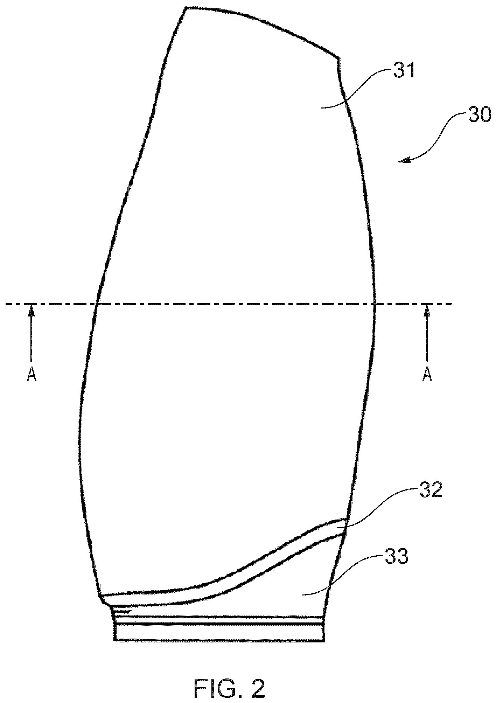

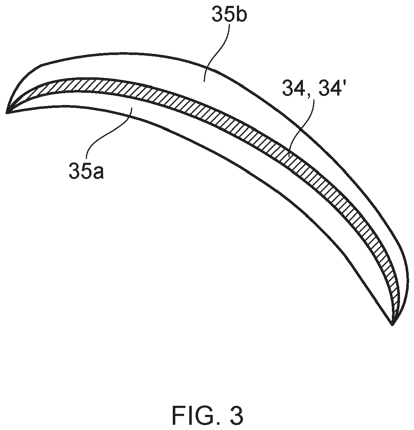

The complex, three-dimensional shape of an example composite component (in this case, a fan blade) is illustrated in FIGS. 2 and 3.

**FIG. 2** shows an example composite fan blade, as may form part of the propulsive fan 13 of a gas turbine engine.

In the example of FIG. 2, the composite fan blade does not comprise metallic leading edge or trailing edge reinforcement, as is known in the art. However, the disclosure now made is also applicable to aerofoils which include at least one of leading edge or trailing edge reinforcement. The fan blade comprises an air-washed portion 31 and a non-air-washed portion 33, separated by an annulus line 32.

**FIG. 3** shows an example cross-section of the fan blade, cut at section A-A of FIG. 2.

The cross-sectional profile, degree of camber, and/or chord length of the fan blade 30 may vary at different cross-sections to section A-A, due to the complex three-dimensional nature of the fan blade.

In the example of FIG. 3, the fan blade (aerofoil) comprises a central core 34 and a plurality of layers 35a, 35b disposed on either side of the central core 34.

In the example of FIGS. 2 and 3, the central core is a core portion 34' of a preform 34, onto which at least one layer of composite material is applied to form the shape of the aerofoil. The preform 34 may also be referred to as a substrate 34 because layers of material are laid onto it.

The preform 34 has an outer profile such that when layers of composite material are laid down upon its outer surfaces, the outer profile of the resulting composite article precursor are formed.

The preform is stiff, in that it is load-bearing, such that it may resist forces generated by layers of composite material being disposed (laid down upon) it, without significant deflection due to the forces acting applied to it. For example, the preform 34 may resist forces generated by an automatic tape laying machine, without significant deflection.

In the examples illustrated in FIGS. 2 and 3, the layers of composite material extend along the chord of the preform 34. The layers of composite material are applied to at least a first surface of the preform, and at least a second surface of the preform that opposes the first surface to respectively form a first grouping 35a and a second grouping 35b of layers of composite material.

When laying down the plurality of layers of composite material, the preform 34 may be held in a substantially horizontal plane, with successive substantially overlaying layers applied to one of the chordally and radially-extending first and second surfaces of the preform 34 to form a stack of layers of composite material, which subsequently substantially define the contours of the outer surface of the suction surface 35a and/or the pressure surface 35b.

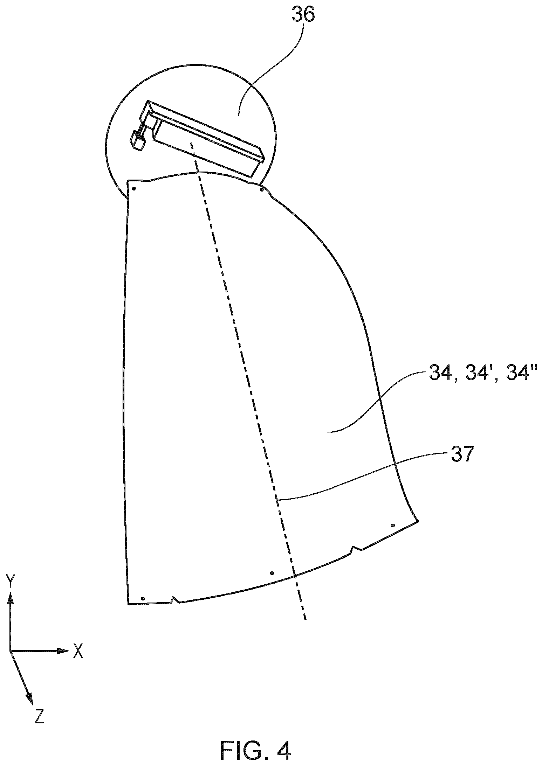

**FIG. 4** illustrates an arrangement for holding the preform during the manufacture of the fan blade. In FIG. 4, the preform 34 is held by a fixture 36.

The preform may be held by a portion of itself that corresponds to a root of the fan blade (a non-air-washed portion 33 of the fan blade). In FIG. 4, the preform is held such that a surface of the preform 34 is substantially upward facing, i.e., accounting for curvature of the surface of the preform, a projection normal to the localised surface of the preform 34 has a substantially vertical component. Layers of composite material disposed upon the preform in this orientation are therefore supported by the preform 34 beneath them and are unlikely to fall away from the preform 34 or separate from each other.

The fixture 36 is also rotatable about an axis of rotation 37, and consequently, the preform is also rotatable about this axis. The axis of rotation may be substantially horizontal.

In some examples, the orientation of the preform 34 may be held constant whilst laying down successive layers onto a surface of the preform 34.

In other examples, the fixture 36 and preform 34 may change their orientation by rotation about axis 37, as a layer of composite material is laid down onto the preform 34 over the chordal and/or radial extent of the preform, such that the surface of the preform to which the layer is applied, remains substantially upright.

The ability to rotate the perform 34 about axis 37 may be advantageous, for example if the plurality of layers are laid down by automated tape laying methods, as partial rotation of the preform 34 about axis 37 may reduce the degree of translation and/or rotation of the tape laying head that would otherwise be required.

It would be desirable, for speed of manufacturing, to lay down a first grouping 35a of layers of composite material on a first surface of the preform 34 to form a first surface of the composite article precursor, and to then rotate the preform 34 about axis 37 by approximately 180 degrees to lay down a second grouping 35b of layers of composite material on a second surface of the preform to form a second surface of the composite article precursor before performing a single vacuum debulking stage.

However, this method of manufacturing has the potential disadvantage that the first grouping of plurality of layers laid down on the first surface of the preform may be insufficiently supported whilst the second plurality of layers are being laid down upon the second surface of the preform 34.

This is because, following rotation about axis 37, the first grouping of layers are beneath the preform 34, with the force of gravity acting on these layers to promote the layers peeling away from the first surface of the preform and/or each other.

To mitigate against this problem, once a first grouping of layers have been laid down on the first surface of the preform, a vacuum debulking stage could be performed before the fixture 36 and preform is rotated about axis 37. Once vacuum debulking completed, the fixture 36 and preform 34 could then be rotated about axis 37 and a second grouping of layers laid down on the second surface of the preform, before performing a second vacuum debulking stage.

Although this method has the advantage that the application of two separate vacuum debulking stages result in a stronger composite article (once cured), with reduced deviation in surface profile, this method has the disadvantage that it is relatively time consuming.

In particular, the application of the first vacuum debulking process is particularly disadvantageous because it requires a switch to, and then back from, different manufacturing methods (composite layer layup to vacuum debulking; vacuum debulking to composite layer lay-up).

In addition, in the above method, the first plurality of layers of composite material laid down (disposed) upon the first surface of the preform 34 remain unsupported whilst the second plurality of composite layers are laid-down (disposed) upon the second surface of the preform. Thus, this method does not fully mitigate the risk that layers within the first grouping of layers may become at least partially detached from each other, during laying down of the second grouping of layers.

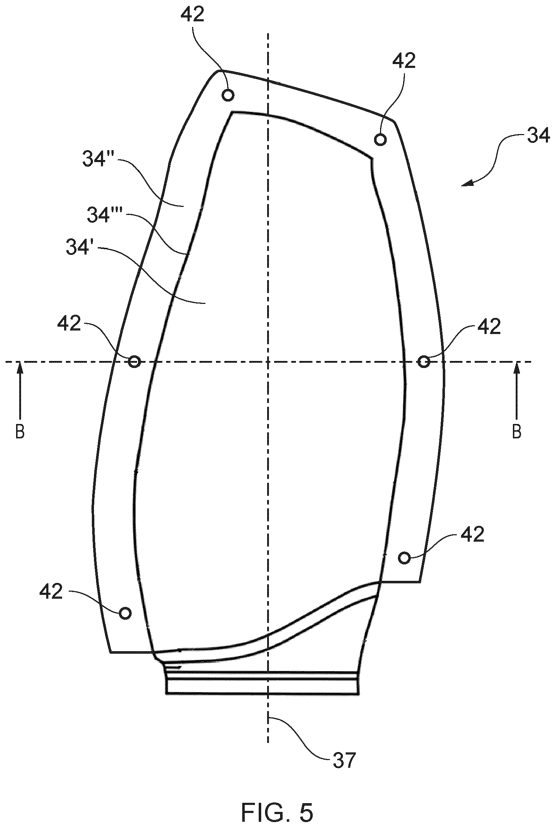

The manufacture of a composite article in accordance with FIGS. 2 and 3, utilising a reduced number of vacuum debulking stages, for example, a single vacuum debulking stage is now disclosed with respect to FIGS. 5 - 12.

**FIG. 5** illustrates a side view of an example preform 34. The preform 34 comprises a core portion 34' which has substantially the same profile of the composite article 30. The core portion 34' will subsequently form the core of the composite article 30, remaining within it.

In the example of FIG. 5, the core portion 34' of the perform 34 is partially surrounded by an optional peripheral portion 34". The peripheral portion 34" additionally comprises a plurality of locations 42 of securing means.

For example, in some embodiments, a through hole is present at each location, such that a securing fixing such as a rivet pin, bolt, or stud may pass through the preform 34.

In other embodiments, securing means that do not comprise a through hole for a mechanical securing fixing such as a rivet pin, bolt or stud may be provided. For example, in these embodiments, a surface of the peripheral portion 34" may be suitable for the application of a vacuum clamp as the securing means, or a magnet clamp as the securing means.

In embodiments in which a magnet clamp is the securing means, the peripheral portion 34" of the preform 34 may additionally comprise at least one portion of magnetic material and/or at least one portion of magnetic material may be attached to a surface of the peripheral portion 34".

In embodiments which do not comprise at least one through hole such that a mechanical securing feature may pass through the preform, optionally, at least two through holes or at least two indentations may be provided in the peripheral portion 34", as location features, for example, for interfacing with at least two complementary location, such as a pair of spigots, each of which extends from a surface of an adjoinable support.

The peripheral portion 34" may be removed from the completed composite article precursor, during manufacturing of the composite article.

It will be appreciated that other forms of preform are envisaged. For example, the perform 34 may only comprise a core portion 34', with locations of 42 securing means towards the periphery of core portion 34'. This may be a less desirable solution though, as even though a through hole at location 42 may be subsequently filled, the through hole may act as a location of a localised weakness in the resulting composite article.

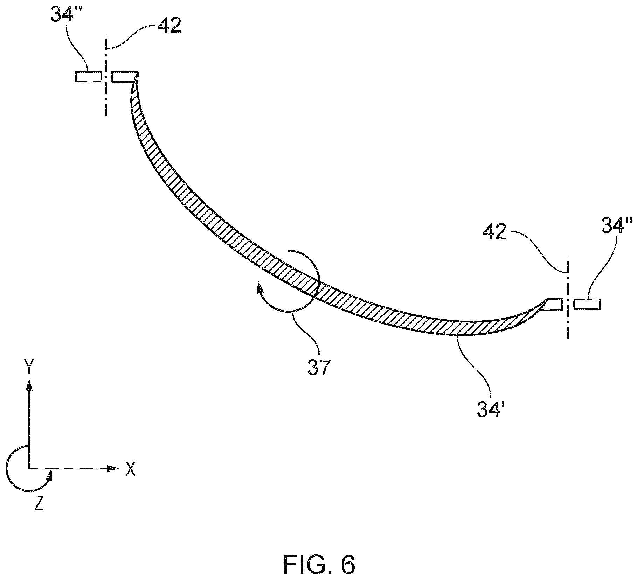

**FIG. 6** shows a cross-sectional view "B-B" through preform 34. A three-dimensional orthogonal co-ordinate system is also shown. In the example of FIG. 6, the z-axis of this three-dimensional orthogonal co-ordinate system is parallel with rotational axis 37.

It will be understood that FIG. 6 provides an illustrative cross-section of a preform that is mounted in the fixture 36 illustrated in FIG. 4, such that the preform is rotatable about a horizontal, or substantially horizontal axis 37.

It will therefore also be understood, that in the three-dimensional co-ordinate system of FIG. 6, the "x" and "z" directions define a horizonal plane, while the "y" direction is in a vertical direction, orthogonal to that plane.

The cross-section of FIG. 6 also shows further detail of the optional peripheral portion 34" of the preform 34. It shows that in this example, the locations 42 of the securing means (securing fixings) each comprise a through-hole. Other alternative securing means and/or orientations of the securing means are also possible within the scope of this application. Similarly, other orientations of the optional peripheral portion 34" to the core portion 34' area also possible. For example, the optional peripheral portion 34" may be orientated at a similar angle to adjacent core portion 34'.

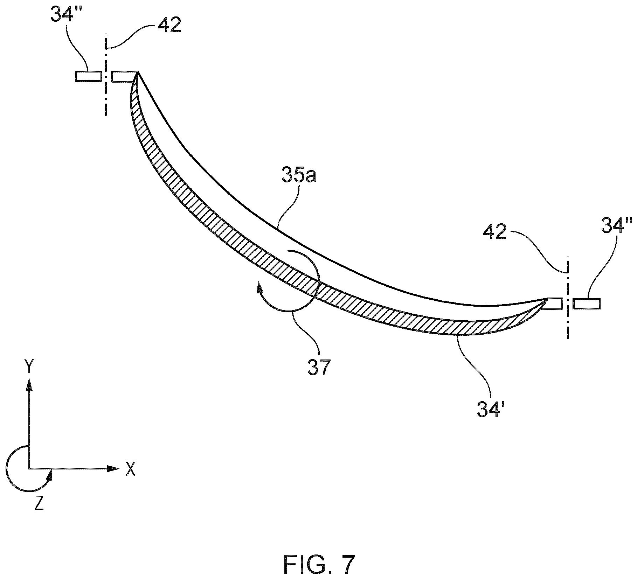

Once the preform 34 is held in the fixture 36, at least one layer of composite material (typically a plurality of layers of composite material), forming a first grouping, is laid down upon a substantially upwardly facing surface of the preform 34, 34'. The resulting cross-section, comprising the first grouping 35a of layers of composite material, laid down upon the substantially upwardly-facing first surface of the preform 34, is shown in **FIG. 7****.**

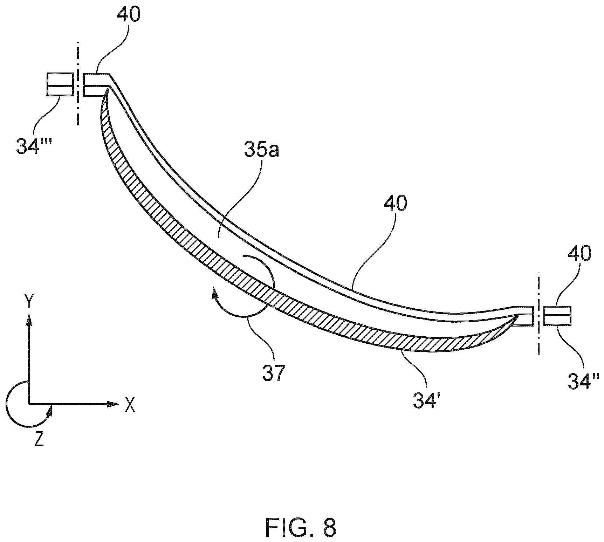

**FIG. 8** shows that a first support 40 is placed on top of the first grouping 35a of layers (disposed over the first grouping 35a plurality of layers), such that the first grouping of layers is between the first support 40 and the preform 34.

The first support 40 is deformable, in that its shape can change during a vacuum debulking process. However, the first support has sufficient stiffness such that it supports the first grouping 35a of composite layers prior to the vacuum debulking stage.

The first support 40 may be made of any suitable material. For example, the first support 40 may comprise an elastomer. The elastomer may be a rubber, such as that manufactured by the Mosites Rubber Company Inc. Alternatively, the first support may comprise a composite, a metal.

It will be appreciated that the desired stiffness of the first support 40 may be controlled based upon the dimensions of the first grouping 35a of layers to be supported and the properties (for example , Young's Modulus) of the material from which the first support is comprised.

For example, if the first support comprises a rubber with a Young's Modulus that is lower than a metal, it will be appreciated that a thickness of a first support comprising rubber will be greater than a thickness of a comparable first support comprising a metal.

Optionally, the surface of the first support that is facing the plurality of laid down composite layers of the first grouping 35a may be profiled such that it follows or substantially follows the desired exterior profile of the plurality of layers. In this way, when the first support is disposed over the plurality of laid down composite layers, minimal gaps are introduced between the support and the composite layers, without substantial deformation of the deformable first support 40.

Optionally, a release film (not shown) may be placed between the first support 40 and the first grouping 35a of layers of composite material.

FIG. 8 also shows that the first support 40 comprises features proximal to location 42 of the first securing feature 41 in the preform 34.

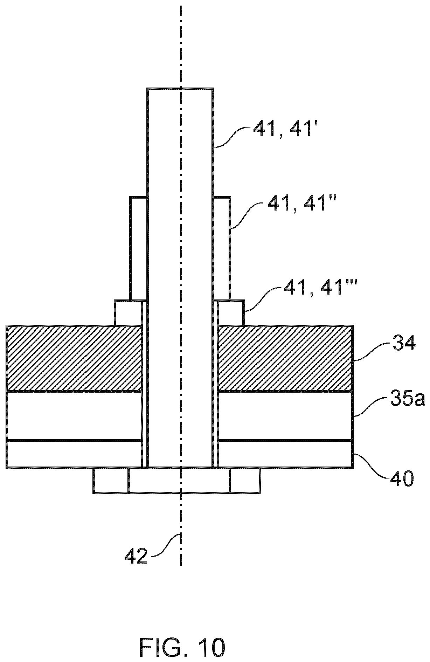

In the example of the FIG. 8, through holes in the first support 40 are aligned with through holes in the peripheral portion 34" of the preform 34, such that the first support 40 may be through-clamped or through-bolted to the preform 34, securing the two together, to form first securing means 41. This is illustrated in more detail in FIG. 10.

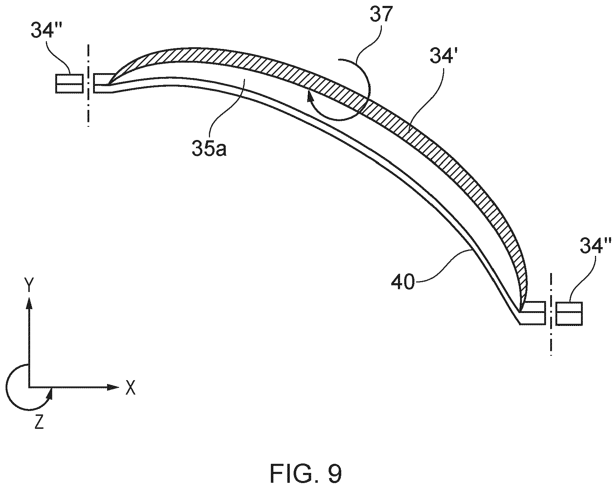

FIG. 9 shows that once the first support 40 has been secured to the preform 34 by the first securing fixing (not shown), the preform is rotated about axis 37 such that the newly applied layers of the first grouping 35a of layers of composite material are below the preform 34 but are supported by the first support 40. Thus, potential separation between layers of the first grouping of layers due to the action of gravity, is prevented.

The second grouping 35b of layers of composite material may then be laid down on the second surface of the preform 40, that second surface of the preform 40 opposing the first surface of the preform 40.

Once the required number of layers have been applied to both the first surface and the second surface of the preform, a vacuum debulking stage may be performed.

The stiffness of the first support 40 is selected such that it may deform during the vacuum debulking stage but does not substantially deflect when supporting the first grouping of layers of composite material.

As the first support 40 may deflect during the vacuum debulking process due to the pressure differential across the vacuum debulking bag, the plurality of layers laid down between the preform 34 (substrate) and the first support 40 are placed under a compressive load during the vacuum debulking process.

This compressive loading at least partially expels gas (air) that has become trapped between successive, adjacent, composite layers during the laying down of these layers. Additionally, by expelling this gas, undulations in the outermost surface of the plurality of layers may be removed or reduced, thereby delivering improved surface profile conformance, and improved aerodynamic performance of the resulting aerofoil.

Thus, by suitable selection of the stiffness of the first support, the effectiveness of the vacuum debulking stage is not adversely affected, whilst the potential for separation between adjacent, overlaying, layers of composite material is at least partially mitigated.

Optionally, the surface of the first support 40 disposed over the first grouping 35a plurality of layers of composite material, may comprise a plurality of through holes. The through holes extend through the thickness of the first support between opposing surfaces of the first support.

The through holes may assist the expulsion of gas (air) from pockets that may form between the facing surfaces of the first support 40 and the first grouping 35a within the plurality of layers during the vacuum debulking process.

The through holes may assist the expulsion of gas (air) from pockets that may form between layers of the first grouping 35a of layers of the composite material during the vacuum debulking process.

Optionally, the surface of the first support that is disposed over the plurality of layers may comprise a plurality of grooves. The grooves may extend to at least one edge of the first support 40. The plurality of grooves creates channels between the plurality of layers (or an intervening release sheet) and the first support, promoting the expulsion of gas (air) from gas pockets within the plurality of layers and/or between facing surfaces of the first support 40 and the first grouping 35a of layers.

The plurality of grooves, if present, may be equi-spaced, or substantially equi-spaced.

Various forms of first securing fixing are envisaged to secure the first support and preform to each other, with it desirable that the fixings are reusable and quick to connect and/or disconnect.

For example, the first securing fixing may be a reusable temporary fastener such as a "skinpin" or CLECO^{®} fastener, as would be familiar to a sheet metal worker. Such fasteners may be referred to as rivet clamps. An arrangement of a plurality of such fixings is a clamping arrangement.

If the securing fixing is a rivet clamp, at least one washer may additionally be used to spread mechanical loading on the surface of the preform that opposes the main body of the fastener, as this is likely to be more prone to localised compressive deformation due to the application of the fastener, than sheet metal with which the fasteners are more traditionally used.

The securing fixing may be a bolting arrangement, as an alternative form of clamping arrangement. An example bolting arrangement is shown in FIG. 10, which shows a bolting arrangement at a single location 42. It will be appreciated from FIG. 6 that a plurality of locations 42 may be provided, to secure the first support 40 to the preform 34. It will also be appreciated that the number and spatial distribution of these locations 42 is not limited to that shown in FIG. 6, but will instead depend upon the size and shape of the preform and grouping of layers to be supported.

In FIG. 10, the first securing fixing 41 comprises a through-bolting arrangement in which the first support 40 comprises a plurality of holes, the location of the holes configured to align with the locations 42 in the preform 34.

In FIG. 10, a securing fastener, such as a bolt 41' is placed through the hole of the first support and corresponding hole of the preform, with a nut 41" applied to the bolt to secure it.

Nut 41" may be tightened to a low torque level. For example, nut 41"may be tightened to be "finger tight", such that it is tightened without requiring the use of additional tooling. However, if differences in the surface profile between the outer surface of the first grouping 35a of the plurality of composite layers and the facing surface of the first support 40 are such that deflection of the first support 40 is required to cause these facing surfaces to substantially abut, then use of tooling may be desirable to tighten nut 41" onto bolt 41'.

FIG. 10 also shows that the securing arrangement may optionally comprise a washer 41‴ to spread mechanical loading in the vicinity of the securing fixing, preventing localised deformation of the preform 34 and/or first grouping 35a of layers of composite material.

It will be readily appreciated that a composite article precursor may curve in multiple dimensions, whilst the thickness of the composite article precursor may vary its surface (for example, in the case of a composite article precursor used in the manufacture of an aerofoil, thickness may vary with % chord and/or % radial blade height).

It will therefore also be appreciated that if securing means, such as first securing fixing 41, are applied orthogonal to the local geometry of the preform, the principal axis of the securing fixing may not be parallel to another securing fixing at a different location 42.

It may therefore be advantageous to provide securing features, such as first securing fixing 41, which are aligned to be parallel to each other, for improved ease of securing the first support 40.

For example, optionally, a contoured washer, having opposing surfaces that are not parallel to each other (not shown in FIG. 10), that is co-axial with bolt 41' may be placed on the surface of the first support 40 that opposes the surface which is facing, and proximal to, the first grouping of layers 35a.

One of the opposing surfaces of the contoured washer is planar, whereas the other opposing surface may be contoured and/or inclined relative to it.

The planar surface is configured to be placed adjacent to the head of bolt 41', such that the bolt may freely rotate.

The contoured surface of the contoured washer has a curvature that substantially equal to the curvature of the first support 40 in the vicinity of location 42
The technical effect of the contoured washer, when used in conjunction with a bolt 41', is that the axis of the bolt 41', about which nut 41" is rotatable, may be inclined at an angle that is not orthogonal to the localised surface of the first support 40.

Use of contoured washers therefore permits bolts 41' at different locations 42 to be aligned parallel to each other, despite curvature of the preform 34 between locations 42.

In a similar manner, washer 41‴ on the opposite side of preform 34 to the head of bolt 41' may also be a contoured washer, such that nut 41" may uniformly sit on the planar surface of the washer.

Alternative means of changing the orientation of the principal axis of a bolted connection relative to the surface of the preform 34 without using contoured washes may also be envisaged.

For example, the first support 40 may not be secured to the preform via a through bolting arrangement using separate bolts 41' but may comprise a plurality of parallel aligned threaded studs that are integral with the first support. The parallel threaded studs are located on the first support such that they align with locations 42 in preform 34. Thus, in this arrangement, the first support 40, comprising the threaded studs, may be disposed upon the first grouping 35a of layers in a single action, ready for nuts 41", and optional washers, to be applied to secure the first support 40 in place.

Alternatively or additionally, in embodiments in which the preform 34 comprises a peripheral portion 34' that will not form part of the finished composite article, the preform 34' may comprise at least one angled boss on the surface of the peripheral portion 34' that does not face first support 40 at locations 42. The angled boss is angled relative to the local surface of the preform, providing a planar surface that is orthogonal to the principal axis of the stud 41', such that a washer 41‴ or nut 41" may be lie flush against the boss, when nut 41" is tightened relative to the stud. The angled boss is functionally equivalent to the use of a contoured washer between the nut and preform.

A further development is also envisaged.

The overlaying of the first support 40 permits a first grouping 35a of a plurality of layers of composite material to be supported while a second grouping 35b of a plurality of layers of composite material is applied, prior to a vacuum debagging process.

The overlaying of the first support has the additional benefit that during the vacuum debulking stage, force applied by the first support 40 produces a greater reduction in undulations in the outer surface of the first grouping of layers than would otherwise occur without its presence. This is because although the first support 40 is deformable, it is less flexible than the surface of the flexible and non-porous bag ("vacuum bag") in which vacuum debulking takes place.

When manufacturing a composite article comprising a single gas-washed surface (for example, such as a panel surrounding a fan in a gas turbine engine fan containment system, or a panel forming part of a surface defining a bypass duct of the gas turbine engine), the above method provides a suitable degree of surface undulation for the gas-washed surface liner but may leave a higher degree of surface undulation for the non-gas washed surface. This higher degree of surface undulation on the non-gas-washed surface may be acceptable, as it does not generate a fluid-dynamic loss in the resulting composite article.

However, if the composite article comprises opposing gas-washed surfaces, it may be desirable to reduce the degree of surface undulation on both gas-washed surfaces.

This may be achieved by disposing a second support 43, over the second grouping 35b of layers of composite material and securing the second support 43 to the first support 40 by a second securing fixing 44.

The second support 43 is conceptually similar to the first support 40, in that is deformable, may be shaped to match the desired outer profile of the grouping of composite layers over which it is overlaid, and may comprise features such as through holes and/or channels to assist in the expulsion of air from the second grouping 35b of layers of composite material over which it is disposed.

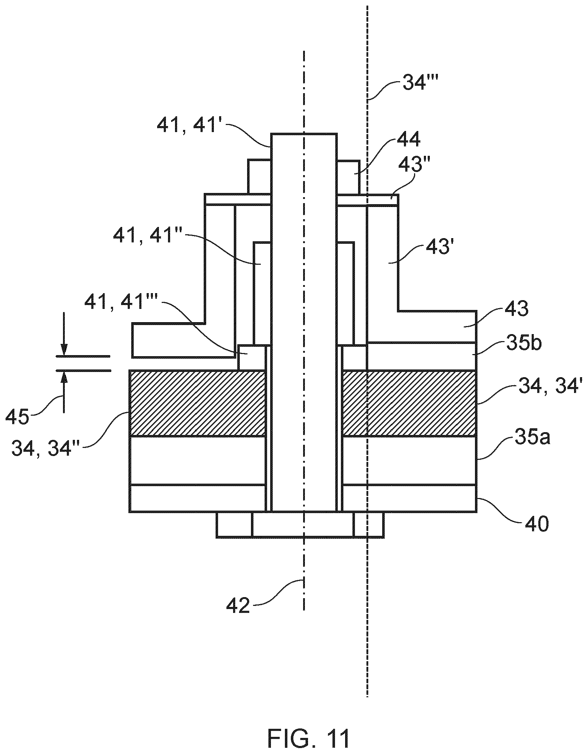

The second securing fixing 44 (for example, a nut) is configured to interface with the bolt 41' or stud 41' of the first securing fixing 41, as illustrated in **FIG. 11****.**

In the example illustrated in FIG. 11, location 42 is within a peripheral portion 34", the boundary 34‴ between core portion 34' and peripheral portion 34" being based upon an edge of the extent of the second grouping 35b of layers of composite material.

The second support comprises a plurality of towers 43', the towers 43' being aligned with the locations 42 of the first securing fixing 41. The towers 43' each additionally comprise an aperture through which a bolt 41' or stud 41' of the first securing means 41 protrudes.

An inner dimension of the towers 43', for example, an inner diameter, is a clearance fit for the bolt 41' or stud 41' and nut 41" of the first securing fixing 41. Thus, although the bolts or studs and nuts 41 "of the first securing fixing 41 locate the second support 43 over the second grouping 35b of layers of composite material, the second support 43 is free to move along the principal axis of studs and/or bolts 41.

A second support top mount 43" is located at the top of tower 43. The second support top mount may be integral with the tower 43 or may be a separate component.

When the second support top mount 43" is located at the top of the tower, a gap exists between the facing surfaces of the top mount 43" and the nut 41" over which it is disposed. Contact therefore does not occur between the top mount 43" and the nut 41" when the second support 43 moves relative to the first support 40 in a direction aligned with the principal axis of the bolt / stud 41'

A second nut 44, may then be applied to each bolt and or stud 41' to secure the second support 43 to the first support 40. The second nut 44, as a second securing fixing, may be tightened to clamp the first support 40 and the second support 43 together.

As the first grouping 35a and second grouping 35b of composite layers are as yet uncured, and may comprise gas bubbles, the clamping load applied to the first support 40 and second support 43 by second securing means 44 may gradually relax over time, as pressure loading as applied by first grouping 35a and second grouping 35b.

This may be undesirable prior to vacuum debulking and may be at least partially mitigated by the provision of a resilient bias in conjunction with the second securing feature 44, the resilient bias being compressed by tightening the second securing feature on bolt 41' or stud 41'.

The resilient bias may be provided in several different ways.

For example, a spring (not shown in FIG. 11), may be placed between tower top mount 43" and nut 44. The spring may be a helical spring, a spring washer and/or a block of resilient deformable material.

Alternatively, tower top mount 43 and/or tower 43' may be resiliently deformable, such that they are compressed or distorted in a direction aligned along the axis of bolts and/or studs 41, due to tightening second securing feature 44.

A spring constant of the spring, tower top mount and/or tower may be determined based upon the dimensions and mass of the grouping of layers to be supported.

Depending upon the degree of deformation of the second support and the proximity of the locations of the first and second securing means to boundary 34"', it may be desirable to configure the second support such that a gap 45 is maintained between a facing surface of the second support and the peripheral portion 34' of the preform 34 (substrate).

For example, if locations 42 are proximal to boundary 43'", and second support 43 is relatively stiff, then contact (lack of a gap 45) may reduce the degree of compression of the second grouping 35b close to the boundary 43‴ during vacuum debulking, as contact between the second support 43 and peripheral portion 34' of the preform 34 may limit deformation.

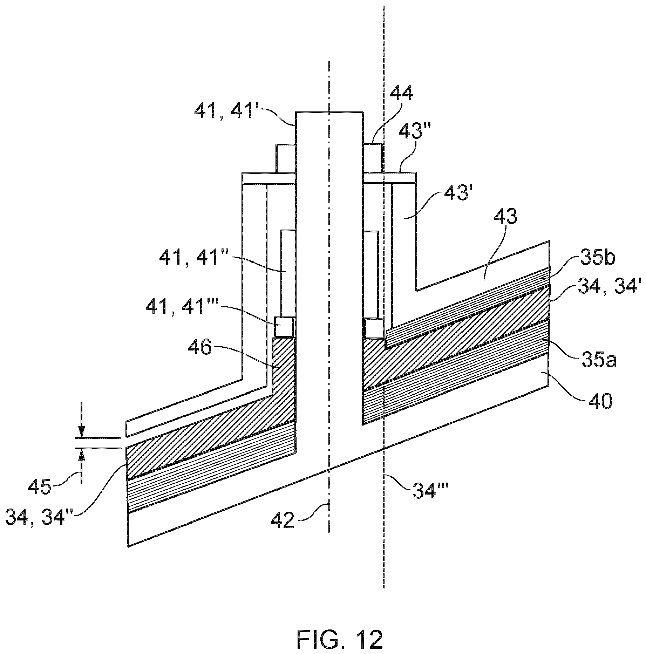

**FIG. 12** provides a further example of a bolting arrangement at a location 42, illustrating some of the above concepts.

Unlike the through-bolting arrangements of FIGS. 10 and 11, it shows a bolting arrangement in which a stud, comprising a male thread, protrudes from the surface of first support 40.

Unlike the bolting arrangements of FIGS. 10 and 11, the stud is orientated at an angle that is not orthogonal to the local surface of first support 40. As previously disclosed, this may be advantageous if the first support is secured at multiple locations 42, with curvature between these locations.

Unlike the preform of FIGS. 10 and 11, the peripheral portion 34" of preform 34 comprises a boss 46 at location 42, the boss comprising a planar face that is orthogonal to the axis of rotation of nut 41" of first securing means 41, enabling easy rotation of nut 41' such that it may be tightened to hold first support 40 proximal to preform 34.

FIG. 12 additionally illustrates a second support 43, secured in a similar manner to that illustrated in FIG. 11.

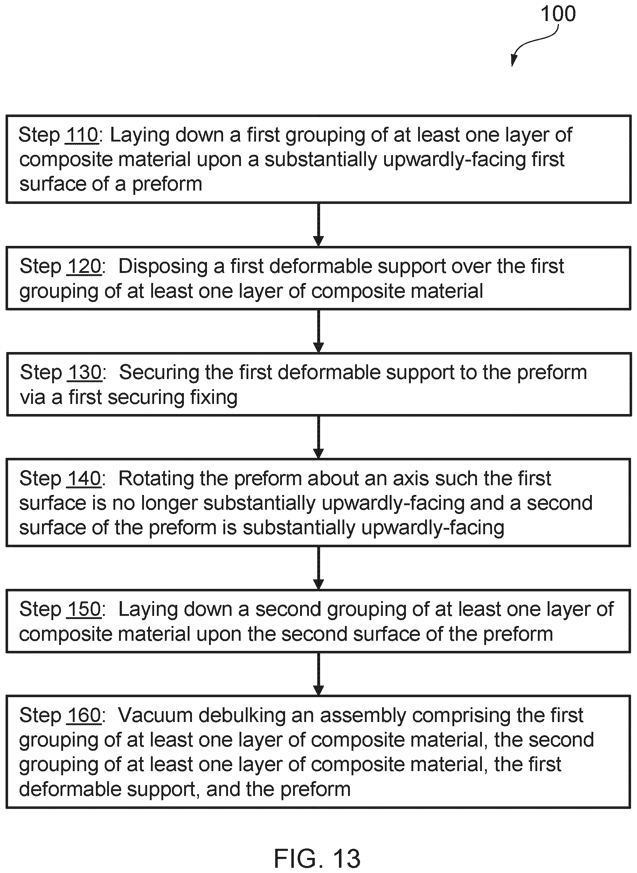

**FIG. 13** discloses a method 100 of manufacturing a composite article precursor. The method comprises the following steps: Step 110: laying down a first grouping of at least one layer of composite material upon a substantially upwardly-facing first surface of a preform of the composite article precursor; Step 120: disposing a first deformable support over the first grouping of at least one layer of composite material; Step 130: securing the first support to the preform via a first securing means; Step 140: rotating the preform about an axis such the first surface is no longer substantially upwardly-facing and a second surface of the preform is substantially upwardly-facing; Step 150: laying down a second grouping of at least one layer of composite material upon the second surface of the preform; and Step 160: vacuum debulking an assembly comprising the first grouping of at least one layer of composite material, first deformable support, and preform.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (100) of manufacturing a composite article precursor, the method comprising the steps of:
laying down a first grouping (35a) of at least one layer of composite material upon a substantially upwardly-facing first surface of a preform of the composite article precursor (34);
disposing a first deformable support (40) over the first grouping (35a) of the at least one layer of composite material;
securing the first deformable support to the preform via a first securing fixing (41);
rotating the preform about an axis (37) such that the first surface is no longer substantially upwardly-facing and a second surface of the preform is substantially upwardly-facing;
laying down a second grouping (35b) of at least one layer of composite material upon the second surface of the preform; and
vacuum debulking an assembly comprising the first grouping (35a) of at least one layer of composite material, the second grouping (35b) of at least one layer of composite material, the first deformable support (40), and the preform (34).

2. The method of claim 1, further comprising:
disposing a second deformable support (43) over the second grouping (35b) of at least one layer of composite material; and
securing the second deformable support to the first deformable support (40) via a second securing fixing (44).

3. The method of claim 1 or 2, further comprising:
placing a first release layer over the first grouping (35a) of at least one layer of composite material before disposing the first deformable support (40) over the first grouping (35a) of at least one layer of composite material; and/or
placing a second release layer over the second grouping (35b) of at least one layer of composite material before disposing the second deformable support (43) over the second grouping of at least one layer of composite material.

4. The method of any preceding claim, wherein the first surface of the preform (34) and the second surface of the preform of the composite component are opposed.

5. The method of any preceding claim, wherein the first deformable support (40) is porous and/or the second deformable support (43) is porous.

6. The method of any preceding claim, wherein vacuum debulking the assembly comprises placing the assembly within a flexible and non-porous bag, sealing the flexible and non-porous bag, and at least partially evacuating the flexible and non-porous bag.

7. The method of any preceding claim, wherein the first securing fixing (41) and/or the second securing fixing (44) forms a clamping arrangement.

8. The method of claim 7, wherein the clamping arrangement is a bolting arrangement comprising a plurality of bolts (41') or a plurality of studs (41') aligned in a common direction.

9. The method of claim 8, wherein the bolting arrangement of the first securing fixing (41) is aligned with the bolting arrangement of the second securing fixing (44).

10. The method of any preceding claim, wherein the first securing fixing (41), and the second securing fixing (44), if any, is located in a peripheral portion (34") of the preform (34) that surrounds a core portion (34') of the preform.

11. The method of any one of claims 2 to 10, wherein the second securing fixing (44) comprises an elastically deformable member which applies a compressive force to the first grouping (35a) of at least one layer of composite material and a compressive force to the second grouping (35b) of at least one layer of composite material.

12. The method of any preceding claim, wherein at least one additional method is performed on at least the composite article precursor to form a composite article (30), the at least one additional method being selected from one of trimming the composite article precursor, reinforcing the composite article precursor and/or coating the composite article precursor.

13. The method of any preceding claim, wherein the composite article (30) is an aerofoil.

14. The method of claim 13, wherein the aerofoil is a fan blade of a gas turbine engine or a blade of a wind turbine.
